# EUROPEAN PATENT SPECIFICATION

(11) **EP 0 479 950 B1**
(45) Date of publication and mention of the grant of the patent: **12.03.1997**
(21) Application number: 90917881.6
(22) Date of filing: 22.06.1990
(51) Int. Cl.: H04J 3/16, H04Q 7/00, H04Q 9/00, H04M 11/00, H04B 7/212, H04B 7/26

(54) **SYNCHRONIZATION AND EQUALIZATION IN A TDMA CELLULAR SYSTEM**
SYNCHRONISIERUNG UND ENTZERRUNG IN EINEM TDMA-ZELLULAREN SYSTEM
SYNCHRONISATION ET EGALISATION DANS UN SYSTEME CELLULAIRE AMRT

(30) Priority: 26.06.1989 US 371764
(43) Date of publication of application: 15.04.1992
(73) Proprietor: MOTOROLA, INC., Schaumburg, IL 60196 (US)
(72) Inventor: LEVINE, Stephen, Norman, Itasca, IL 60143 (US); PUHL, Larry, Charles, Sleepy Hollow, IL 60118 (US); CARNEY, Scott, Nelson, Palatine, IL 60067 (US); GOODE, Steven, Howard, Barrington, Illinois 60010 (US)
(74) Representative: Ibbotson, Harold
(86) International application number: US9003570
(87) International publication number: WO9100660

(56) References cited:
- US-A- 4 252 999
- US-A- 4 414 661
- US-A- 4 754 453
- US-A- 4 829 543

## Description

### THE FIELD OF INVENTION

This invention is concerned with synchronization and equalization.

More particularly, this invention is concerned with system synchronization and equalization in a Time Division Multiple Access (TDMA) cellular system.

### BACKGROUND OF THE INVENTION

In land-mobile Time Division Multiple Access (TDMA) wireless systems, where the arrival times of subscriber transmissions must be arranged in time with the cell synchronization (advanced or retarded) to account for differing propagation delays due to the mobility of the subscriber, synchronization information must be provided to the subscriber to acquire and maintain all transmissions synchronized into the Time Division Multiplexed (TDM) slot structure of the communications channel.

One way is to provide sufficient guard time before the subscriber transmission of any useful information to accommodate the furthest expected transmission. Then, that subscriber is commanded to advance its subsequent transmissions to become synchronous with the cell. Known synchronizing sequences are incorporated within all transmissions and used for maintaining cell synchronization.

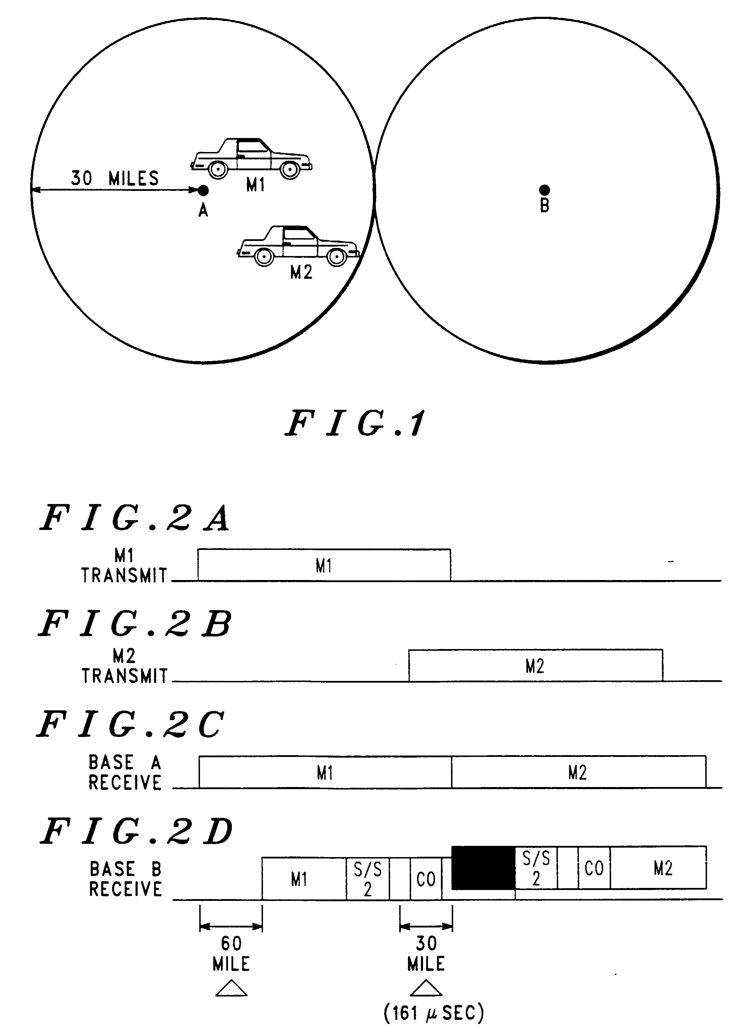

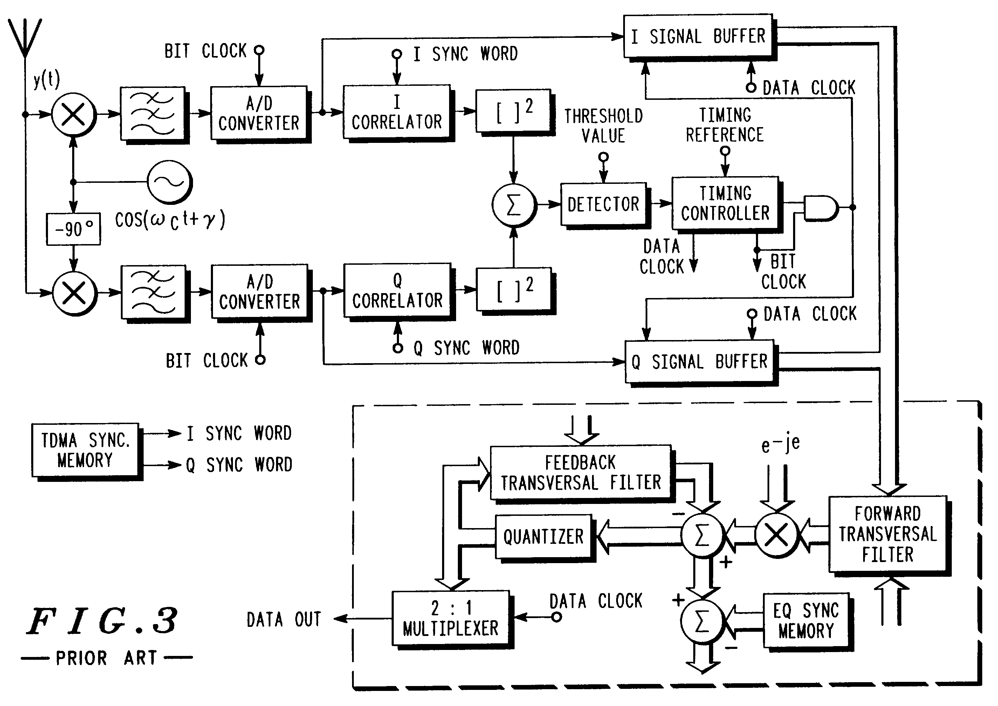

The problem in cellular TDMA systems is that adjacent cells must aperiodically monitor subscribers in neighboring cells for handoff candidacy (as the subscriber moves from cell to cell). Thus, as illustrated in Figure 1, when subscribers have been synchronized to their host cell (taking account of their respective range from the host), subscriber transmissions are out of synchronism with those of adjacent cells (because of the probable opposite relationship of their ranges from the adjacent cell site). For example, if Mobile subscriber 2 (**M2**) has its transmissions advanced (as in Figure 2b) by eight bits (at 48 Kbps - kilobits per second) to account for the thirty mile difference in range from cell site A in order to arrive in time slot 2 following (Figure 2c) that of Mobile subscriber 1 (**M1**), Figure 2a, M2's transmissions will have advanced toward Ml's. Yet, for adjacent cell B, Ml's transmissions should have been advanced toward M2's to accommodate the differences in their respective ranges from cell site B. Accordingly, the end of Ml's transmissions in time slot 1 will collide with the beginning of M2's transmissions in time slot 2 as received by cell site B (as illustrated by the hatched area of Figure 2d). Thus, synchronizing information (the information of interest to the adjacent cell) cannot appear at the start of a time slot, or it will be subject to collision (in the hatched area of Figure 2d).

Wireless transmissions reflect off numerous objects and obstructions on their way to the receiver. As a result, for proper detection of the individual bits of information transmitted, equalizers must align in time the various time-dispersed echoes it receives and make decisions about each bit. Accordingly, the receiver correlates the synchronization sequence present within each echo against a known sequence and, having the instant of correlation of each echo, is able to align them in time and obtain time-dispersal coefficients for equalization. Having the instant of correlation and the time-dispersal function, it is possible to detect subsequent information (and to retrospectively detect preceding information, if stored) until the propagation conditions change and alter the time-dispersal characteristics. Adaptive equalization, although computationally intensive, adapts the coefficients to track the time-dispersal characteristics over time; the longer the time (measured by number of bits) since the arrival of the synchronization/equalization sequence, the greater the need for adaptive equalization. A more extensive discussion of adaptive equalization can be found in: *Shahid Qureshi, Adaptive Equalization, IEEE Communications Magazine, March 1982, 0163-6804/82/0300-0009, pp. 9-16.*

The Pan-European Digital Cellular system is a TDMA cellular system that employs a mid-amble -- synchronizing information appears in the middle of the time slot. Our problem never arose there because fixed equalization at their data rate and slot length is adequate for reliable detection in both the forward time direction and the reverse time direction. However, at our data rate and slot length, *adaptive* equalization would be required for reliable detection in the reverse time direction, adding substantially to the complexity of the equalizer and requiring a sizeable memory to store the time-dispersed echoes preceding the synchronization sequence.

Publication WO-A-88/05981 (D1) discloses a TDMA communication system including a receiving station for receiving a TDMA signal and de-multiplexing a first user message from other user messages of said received TDMA signal and means for equalizing the time delay spread characteristics of a data word portion of said received TDMA signal in response to the demultiplexing.

This invention takes as its object to overcome these shortcomings and to realize certain advantages presented below.

### SUMMARY OF THE INVENTION

Accordingly, the present invention provides a method of synchronization and equalization in a Time Division Multiple Access (TDMA) cellular system (FIG. 1) providing synchronization information (S/S) removed from the start of a TDM slot (M1) so as to avoid collision of that synchronization information (S/S) at adjacent cells; and characterized by the step of providing that synchronization information (S/S) within the TDM slot (M1) such that non-adaptive equalization of information preceding the synchronization information is performed following receipt of the synchronization information (S/S).

The equalization is further enhanced by providing between the synchronization information and the end of the slot, additional information upon which equalization may retrain.

Accordingly, equalizers perform retrospective, non-adaptive equalization of information preceding the synchronization information, perform adaptive equalization of information following that synchronization information, and retrain utilizing known bit-sequences elsewhere within the TDM slot; the additional information comprises known bit-sequences identifying particular cells.

### Description of the Drawings

Additional objects, features and advantages of the invention will be more clearly understood and the best mode contemplated for practicing it in its preferred embodiment will be appreciated (by way of unrestricted example) from the following detailed description, taken together with the accompanying drawings in which:

FIG. 1 is a graphic illustration of the problem solved by this invention and the environment in which the preferred embodiment of the invention operates.

FIG. 2a through 2d are timing diagrams of the problem encountered and the solution offered by the preferred embodiment of the invention.

One of any number of exemplary embodiments of such an apparatus is illustrated in US Pat. No. 4,829,543 to Borth et al. and assigned to Motorola, the instant assignee, and reproduced herein as a prior art figure for the convenience of the reader.

### DETAILED DESCRIPTION

This invention recognizes that, by positioning synchronization information **(S/S)** sufficiently beyond the start of the TDM slot, the integrity of the synchronization information will be maintained and will not be collided with by the end of the previous slot (the hatched area of Figure 2d). Moreover, positioning the synchronization as far forward as is consistent with avoiding collision allows any retrospective detection of data to be done by a fixed coefficient equalizer rather than an adaptive equalizer. This is far less computationally intensive and substantially reduces the memory requirements (because far less information must be retained for retrospective processing).

In the preferred embodiment of the invention, synchronization information is provided sixteen bits (2 radii of range difference at 30 miles at 48 Kbps) after the start of the time slot (i.e., just beyond the hatched area of Figure 2d), which provides the extra guard time required at the adjacent cells. Thus, only sixteen bits need be stored for retrospective processing (thereby substantially reducing memory requirements) and, since the time-dispersal characteristics are far less likely to change significantly over that sixteen-bit interval, the necessity for retrospective *adaptive* equalization is eliminated (thereby substantially reducing the complexity of the equalization). Control information (information that is unimportant to the adjacent cell) is transmitted in the beginning sixteen bits of the slot.

As further improvement, known bit-sequence identifying the host cell (**CC** -- "color code" or Digital Supervisory Audio Tone - DSAT) that are regularly exchanged as an integral part of all transmissions can be transmitted somewhat later in the slot -- somewhere (avoiding the hatched area of Figure 2d) -- such that it also is available to the adjacent cell. So placed, it would be useable for retraining the adaptive equalizer as it correlates on the sequence; for that purpose, perhaps somewhere midway between the synchronization sequence and the end of the slot would be optimal.

An attendant advantage of such a *separate* cell identification field is that the field may be readily detected without decoding of other parts of the transmission (e.g., the digitized voice message or error correction information). Thus, this field can be readily utilized by rudimentary, nonvoice-capable scanning receivers (for confirmation of the candidacy of a subscriber for handoff), resulting in substantial hardware and processing simplification. Moreover, this field, received intact due to its advantageous position within the time slot, can be readily utilized for positive muting (voice muting) of co-channel interferers (with different "color codes") that would otherwise result in inadvertent reconstruction of voice messages from other cells.

The attendant advantages of this invention include elimination of retrospective *adaptive* equalization (and its concomitant computational penalties) and a substantial reduction in memory requirements.

In a Time Division Multiple Access (TDMA) cellular system, there has been provided a mechanism for synchronization and equalization comprising: providing synchronization information sufficiently removed from the start of a TDM slot so as to maintain the integrity of that synchronization information at adjacent cells and providing that synchronization information not so far removed from the start of the slot as to necessitate adaptive equalization of information preceding the synchronization information for sufficiently reliable recovery.

The equalization has further been enhanced by providing, roughly midway between the synchronization information and the end of the slot, additional information upon which equalization may retrain.

Accordingly, equalizers perform retrospective, non-adaptive equalization of information preceding the synchronization information, perform adaptive equalization of information following that synchronization information, and retrain utilizing known bit-sequences elsewhere within the TDM slot; the additional information comprises known bit-sequences identifying particular cells.

The foregoing discussion is only meaningful for subscriber-to-system communication as only those are of interest at the adjacent cell.

The means for implementing the invention presented above are easily constructed and well understood by those ordinarily skilled in this field. One of any number of exemplary embodiments of such an apparatus is illustrated in US Pat. No. 4,829,543 to Borth et al. and assigned to Motorola, the instant assignee, and reproduced herein as a prior art figure for the convenience of the reader. While the preferred embodiment of the invention has been described and shown, it will be appreciated by those skilled in this field that other variations and modifications of this invention may be implemented; these and all other variations and adaptations are expected to fall within the ambit of the appended claims.

## Claims

1. A method of synchronization and equalization in a Time Division Multiple Access (TDMA) cellular system providing synchronization information (S/S) removed from the start of a TDM slot (M1) so as to avoid collision of that synchronization information (S/S) at adjacent cells; and characterized by the step of providing that synchronization information (S/S) within the TDM slot (M1) such that non-adaptive equalization of information preceding the synchronization information is performed following receipt of the synchronization information (S/S).

2. A method as claimed in Claim 1 above, further characterized by the step of providing subsequent additional information (CO) not subject to collision at adjacent cells upon which equalization may retrain.

3. A method as claimed in Claim 2 above, wherein the additional information (CO) is provided between the synchronization information (S/S) and the end of the slot (M1).

4. A method as claimed in Claim 2 above, wherein the subsequent additional information (CO) comprises bit-sequences identifying cells.

5. A method as claimed in Claim 4 above, wherein the bit-sequences are utilized for confirming handoff candidacy.

6. A method as claimed in Claim 4 above, wherein the bit-sequences are utilized for voice muting.

7. A method of synchronization and equalization in a Time Division Multiple Access (TDMA) cellular system characterized by the steps of:
performing non-adaptive equalization of information, received in a signal burst (M1), preceding a synchronization information (S/S) after receipt of the synchronization information (S/S); and
performing adaptive equalization of information following the synchronization information (S/S).

8. A method as claimed in Claim 7 above, further characterized by the step of retraining the adaptive equalization utilizing known bit-sequences (CO).

9. A method as claimed in Claim 8 above, wherein the known bit-sequences comprise sequences identifying cells (A, B).

10. An apparatus for synchronization and equalization in a Time Division Multiple Access (TDMA) cellular system characterized by:
means for performing non-adaptive equalization of information preceding the synchronization information (S/S) after receipt of the synchronization information (S/S); and
means for performing adaptive equalization of information following that synchronization information (S/S).

## Patentansprüche

1. Verfahren zum Synchronisieren und Entzerren in einem zellularen Zeitmultiplex-Mehrfachzugriff- (TDMA) System, das von dem Anfang eines TDM-Schlitzes (M1) entfernte Synchronisationsinformation (S/S) bereitstellt, um eine Kollision dieser Synchronisationsinformation (S/S) in benachbarten Zellen zu vermeiden, und gekennzeichnet durch den Schritt zum Bereitstellen dieser Synchronisationsinformation (S/S) innerhalb des TDM-Schlitzes (M1) derart, daß eine nicht-adaptive Entzerrung von Information, die der Synchronisationsinformation vorangeht, im Anschluß an den Empfang der Synchronisationsinformation (S/S) durchgeführt wird.

2. Verfahren nach Anspruch 1, weiter gekennzeichnet durch den Schritt des Bereitstellens nachfolgender zusätzlicher nicht der Kollision in angrenzenden Zellen unterliegender Information (CO), auf der die Entzerrung umschulen kann.

3. Verfahren nach Anspruch 2, bei dem die zusätzliche Information (CO) zwischen der Synchronisationsinformation (S/S) und dem Ende des Schlitzes (M1) bereitgestellt wird.

4. Verfahren nach Anspruch 2, bei dem die nachfolgende zusätzliche Information (CO) Bitfolgen umfaßt, die Zellen identifizieren.

5. Verfahren nach Anspruch 4, bei dem die Bitfolgen zum Bestätigen der Übergabeantwartschaft verwendet werden.

6. Verfahren nach Anspruch 4, bei dem die Bitfolgen zur Sprachdämpfung verwendet werden.

7. Verfahren zum Synchronisieren und Entzerren in einem zellularen Zeitmultiplex-Mehrfachzugriff- (TDMA) System, gekennzeichnet durch die Schritte:
Durchführen einer nicht-adaptiven Entzerrung von Information, die in einem Signalbündel (M1) empfangen wird, das einer Synchronisationsinformation (S/S) vorangeht, nach dem Empfang der Synchronisationsinformation (S/S) und
Durchführen einer adaptiven Entzerrung von Information, die der Synchronisationsinformation (S/S) folgt.

8. Verfahren nach Anspruch 7, weiter gekennzeichnet durch den Schritt des Umschulens der adaptiven Entzerrung unter Verwendung bekannter Bitfolgen (CO).

9. Verfahren nach Anspruch 8, bei dem die bekannten Bitfolgen Folgen umfassen, die Zellen (A, B) identifizieren.

10. Vorrichtung zum Synchronisieren und Entzerren in einem zellularen Zeitmultiplex-Mehrfachzugriff- (TDMA) System, gekennzeichnet durch:
eine Einrichtung zum Durchführen einer nicht-adaptiven Entzerrung von Information, die der Synchronisationsinformation (S/S) vorangeht, nach dem Empfang der Synchronisationsinformation (S/S) und
eine Einrichtung zum Durchführen einer adaptiven Entzerrung von Information, die dieser Synchronisationsinformation (S/S) folgt.

## Revendications

1. Procédé de synchronisation et d'égalisation dans un système d'Accès Multiple à Division dans le Temps (TDMA) fournissant une information de synchronisation (S/S) éloignée du début d'un intervalle TDM (M1) de façon à éviter une collision de cette information de synchronisation (S/S) sur des cellules adjacentes, caractérisé par une étape de prévision de cette information de synchronisation (S/S) dans l'intervalle TDM (M1) de telle façon qu'une égalisation non adaptative de l'information précédant l'information de synchronisation soit effectuée suite à la réception de l'information de synchronisation (S/S).

2. Procédé selon la revendication 1, caractérisé, de plus, par une étape de prévision d'une information additionnelle suivante (CO) non sujette à collision sur des cellules adjacentes sur laquelle l'égalisation peut se recycler.

3. Procédé selon la revendication 2, selon lequel l'information additionnelle (CO) est prévue entre l'information de synchronisation (S/S) et la fin de l'intervalle (M1).

4. Procédé selon la revendication 2, selon lequel l'information additionnelle suivante (CO) comprend des séquences binaires identifiant des cellules.

5. Procédé selon la revendication 4, selon lequel les séquences binaires sont utilisées pour confirmer une candidature au décrochage.

6. Procédé selon la revendication 4, selon lequel les séquences binaires sont utilisées pour un réglage de silence de voix.

7. Procédé de synchronisation et d'égalisation dans un système cellulaire d'Accès Multiple à Division dans le Temps (TDMA), caractérisé par les étapes suivantes :
- une égalisation non adaptative de l'information reçue dans une impulsion de signal (M1) précédant une information de synchronisation (S/S) après la réception de l'information de synchronisation (S/S); et
- une égalisation adaptative de l'information suite à l'information de synchronisation (S/S).

8. Procédé selon la revendication 7, caractérisé, de plus, par une étape de recyclage de l'égalisation adaptative à l'aide de séquences binaires connues (CO).

9. Procédé selon la revendication 8, selon lequel les séquences binaires connues comprennent des séquences identifiant des cellules (A, B).

10. Dispositif de synchronisation et d'égalisation dans un système cellulaire d'Accès Multiple à Division dans le Temps (TDMA), caractérisé par :
- un moyen pour effectuer une égalisation non adaptative de l'information reçue dans une impulsion de signal (M1) précédant une information de synchronisation (S/S) après la réception de l'information de synchronisation (S/S); et
- un moyen pour effectuer une égalisation adaptative de l'information suite à l'information de synchronisation (S/S).
